# EUROPÄISCHE PATENTSCHRIFT

(11) **EP 2 164 620 B1**
(45) Veröffentlichungstag und Bekanntmachung des Hinweises auf die Patenterteilung: **07.11.2012**
(21) Anmeldenummer: 08773537.9
(22) Anmeldetag: 19.06.2008
(51) Int. Cl.: B01J 2/16, B01J 8/18, B01J 8/08

(54) **VORRICHTUNG ZUM BEHANDELN VON PARTIKELFÖRMIGEM GUT**
DEVICE FOR TREATING PARTICULATE MATERIAL
DISPOSITIF POUR TRAITER UNE MATIÈRE PARTICULAIRE

(30) Priorität: 25.06.2007 DE 102007030862
(43) Veröffentlichungstag der Anmeldung: 24.03.2010
(73) Patentinhaber: Hüttlin, Herbert, 79585 Steinen (DE)
(72) Erfinder: Hüttlin, Herbert, 79585 Steinen (DE)
(74) Vertreter: Witte, Weller & Partner
(86) Internationale Anmeldenummer: PCT/EP2008/004957
(87) Internationale Veröffentlichungsnummer: WO 2009/000464

(56) Entgegenhaltungen:
- DE-A1- 3 516 966
- DE-U1-202005 003 791
- US-A- 4 854 854
- US-A- 5 634 516

## Beschreibung

Die Erfindung betrifft eine Vorrichtung zum Behandeln von partikelförmigem Gut, mit einem Gehäuse, das eine Prozesskammer zum Aufnehmen und Behandeln des Gutes, einen mit Durchtrittsöffnungen für Prozessluft versehenen Boden, einen Deckel mit einem Auslass für die Prozessluft, einen Einlass für die Prozessluft, sowie eine die Prozesskammer umfänglich umgebende Wand aufweist, wobei die Wand eine innere Wand und eine diese in radialem Abstand umgebende äußere Wand aufweist, wobei der Einlass für die Prozessluft am Deckel angeordnet ist und in einen zwischen innerer und äußerer Wand gebildeten Zwischenraum mündet, der strömungstechnisch mit den Durchtrittsöffnungen im Boden verbunden ist.

Eine derartige Vorrichtung ist aus der DE 31 19 905 C2 und aus der DE 202 005003 791 bekannt.

Der darin beschriebene Wirbelbettreaktor dient zur Verbrennung von Kohle unter hohem Druck. Die innere Wand ist als statisch tragende, isolierte Wand ausgebildet und ist im Abstand von einer äußeren Wand umgeben. Um Leckagen, insbesondere aufgrund von thermischen Ausdehnungen und Spannungen möglichst gering zu halten, ist die besondere Luftführung in dem Zwischenraum zwischen innerer und äußerer Wand vorgesehen.

Weitere Vorrichtungen, wie z.B. die Vorrichtung aus der DE 100 54 557 A1 dienen dazu, um ein partikelförmiges Gut zu trocknen, zu granulieren oder zu coaten. Ein gasförmiges Medium, sogenannte Prozessluft, wird durch die Durchtrittsöffnungen im Boden in die Prozesskammer eingeführt. Dabei ist bekannt geworden, den Boden unterschiedlich auszugestalten, wie das bspw. aus der DE 199 04 147 A1, der DE 102 02 582 C1 oder der DE 102 48 116 B3 bekannt ist. Das zu behandelnde Gut wird durch die Prozessluft verwirbelt, wobei die Wirbelcharakteristik jeweils von der Gestaltung des Bodens abhängig ist. Wird der Prozessluft durch den Boden noch eine gewisse umfänglich Komponente auferlegt, bildet sich nach und nach ein toroidal umlaufender Wirbelstromring aus.

Sollen aus staubfeinem Pulver größere Agglomerate gebildet werden, soll also das Gut granuliert werden, wird dem verwirbelten Gut über Düsen ein klebriges Medium zugeführt.

Beim Coaten soll einem bereits vorhandenen Körper möglichst gleichmäßig eine Überzugsschicht aufgebracht, also aufgesprayed werden.

Die Prozessluft wird über einen Einlass in eine unter dem Boden angeordnete Anströmkammer, dem sogenannten Zuluft-Windhaus eingeführt und dringt dann durch die zahlreichen Öffnungen durch den Boden in die Prozesskammer ein. Der Gehäuseteil, der das Zuluft-Windhaus umschließt, ist dom- oder kappenartig ausgebildet und ist mit einem tangential angeordneten Zuluftstutzen verbunden. Die Zuluft selbst wird abseits in einer sogenannten Zuluft-Monoblock-Einheit konditioniert. Da diese Apparaturen vorzugsweise in der pharmazeutischen Industrie Einsatz finden, werden hochwertige Materialien, meist Edelstahlmaterialien eingesetzt. Das Anschweißen eines tangential verlaufenden Zuluftstutzens an das unter dem Boden angeordnete Zuluft-Windhaus ist sehr aufwändig und führt letztendlich zu einer raumergreifenden voluminösen und sperrigen Bauweise.

Nach Verlassen der Prozesskammer, gegebenenfalls nach Durchströmen von am oberen Ende der Prozesskammer angeordneten Filtern, wird die Prozessluft durch einen Deckel hindurch abgeführt. Diese abgeführte Prozessluft wird einer Abluft-Monoblock-Einheit zugeführt, die für eine umweltgerechte Entsorgung der Prozessluft sorgt.

Die Wand, die die Prozesskammer umfänglich umschließt, ist meist eine zylindrisch stehende Wand, deren Innenseite dem Gut zugewandt ist und mit diesem in Berührung steht, somit unmittelbar die Umgrenzung der Prozesskammer darstellt.

Da bei großen Vorrichtungen diese Wand als tragende Wand ausgebildet sein muss, bestehen zahlreiche Verstärkungsmaßnahmen oder Schweißnähte, die mit dem verwirbelnden Gut in Berührung treten können, was dem Behandlungsergebnis nicht zuträglich ist.

Es ist ja ein Bestreben in dieser Technologie, über das gesamte Gut ein gleichmäßiges Behandlungsergebnis zu erzielen.

Bei sehr großen Vorrichtungen ist auch von Nachteil, dass durch das bodenseitige Zuluft-Windhaus und den abströmseitigen Deckel eine relativ große Bauhöhe resultiert, die in manchen Betriebsgebäuden nicht realisierbar ist.

Die metallische Masse von Anlagen nach dieser Bauweise ist sehr groß und die Isolierung gegenüber der Umgebung ist oftmals nicht ausreichend oder überhaupt nicht vorhanden.

Aus ökonomischen und prozesstechnischen Gründen ist erwünscht, dass der produktberührende Gehäusezylinder schnell aufgeheizt, bzw. bei Behandlungen mit unterschiedlichen Temperaturen möglichst rasch auf andere Temperaturen gebracht werden kann. Beim sogenannten "hotmelt" Coating-Prozessen, wo flüssige Wachse oder Fette heiß auf zu beschichtende Produktoberflächen aufgesprüht werden, ist eine schnelle oder zuverlässige Abkühlung und Erstarrung des versprühten Beschichtungsmediums auf der Oberfläche des zu beschichtenden Gutes erforderlich.

Bei einer thermisch trägen Vorrichtung oder bei einer schlechten Isolierung können diese Bedingungen nur schwierig eingehalten werden.

Im pharmazeutischen Bereich stehen auch Aspekte der Hygiene im Vordergrund, nämlich, dass eine solche Apparatur nach einem Einsatz möglichst einfach gereinigt werden kann. Stellt die die Prozesskammer umgebende Wand aber gleichzeitig das tragende Gebilde dar, ist es schwierig, Zugang zum Innenraum zu finden oder bspw. visuelle Kontakte von der Außenseite durch Schaugläser zu installieren, da diese zwangsläufig die statische Stabilität beeinträchtigen würden.

Es ist daher Aufgabe der vorliegenden Erfindung, hier Abhilfe zu schaffen und eine Apparatur dahingehend weiter zu entwickeln, dass ökonomische, ökologische und auch Aspekte der Hygiene mehr Berücksichtigung finden.

Erfindungsgemäß wird die Aufgabe dadurch gelöst, dass die äußere Wand als statisch tragende Gehäusewand ausgebildet ist, dass der Deckel von der äußeren Wand getragen ist, und dass die innere Wand für einen raschen Wärmetransport ausgebildet ist.

Dadurch, dass sowohl der Einlass als auch der Auslass am Deckel angeordnet sind, kann bodenseitig ein voluminöses Zuluft-Windhaus mit entsprechendem Einlassstutzen entfallen. Dadurch kann prinzipiell die Bauhöhe verringert werden.

Das Vorsehen der inneren Wand im Abstand zur äußeren Wand schafft einen Zwischenraum, über den die Zuluft vom Deckel zu den Durchtrittsöffnungen im Boden geführt kann.

Das bedeutet, die Zuluft strömt vom Deckel durch den Zwischenraum vertikal nach unten, strömt die Unterseite des Bodens von allen Seiten gleichmäßig an und tritt durch die Durchtrittsöffnungen im Boden in die Prozesskammer ein. Die Abluft strömt am oberen Ende der Prozesskammer über den Deckel und den Auslass aus der Apparatur ab. Dadurch, dass die Zuluft die Außenseite der inneren Wand vom Deckel zum Boden hin gerichtet umströmt, kann diese Wand sehr schnell auf die gewünschte Temperatur gebracht werden.

Durch Vorsehen von zwei Wänden ist es nun möglich, die innere Wand, deren Innenseite direkt mit dem Produkt in Berührung steht, entsprechend für diesen Vorgang optimal auszubilden, wohingegen die äußere Wand, die nicht mit dem Produkt in Berührung tritt, entsprechend unabhängig vom Produkt ausgebildet werden kann, insbesondere statische Erfordernisse erfüllen kann. Für Vorgänge, bei denen die Prozessluft das Gut aufwärmt, ist die innere Wand gut wärmeleitend ausgebildet. Die nach unten strömende Prozessluft gibt schon Wärme an die innere Wand ab, die die Wärme in die durch innere Wand umgrenzte Prozesshammer bzw. das in darin verwirbelte Gut abgibt. Diese Luftführung erlaubt nicht nur ein schnelles Anfahren der Vorrichtung, sondern ermöglicht auch eine effiziente Wärmeführung mit schnellen Temperaturwechseln, somit eine ökonomische Prozessführung.

Die Maßnahme, dass die äußere Wand als statisch tragende Gehäusewand ausgebildet ist, hat den Vorteil, dass diese äußere Wand mit entsprechenden Schweißnähten, Verstärkungsrippen, Flanschen, Stabilisierungswinkeln, Montagewinkeln und dergleichen versehen werden kann, ohne dabei Rücksicht nehmen zu müssen, ob diese Bauteile negativen Einfluss auf das zu behandelnde Gut ausüben, denn diese Wand tritt nicht mehr mit dem zu behandelnden Gut in Berührung.

Die Maßnahme, dass der Deckel von der äußeren Wand getragen wird, hat den Vorteil, dass die entsprechenden Montagemaßnahmen nur in Verbindung mit der äußeren Wand notwendig sind.

In einer weiteren Ausgestaltung der Erfindung ist der Deckel bewegbar an der äußeren Wand angebracht.

Diese Maßnahme hat den Vorteil, dass der Deckel abklappbar oder verschwenkbar ausgebildet werden kann, wobei die entsprechenden Bewegungsmechanismen von der äußeren stabilen Wand getragen werden.

Dies eröffnet eine einfache Zugangsmöglichkeit zum Innenraum der Prozesskammer, in dem bspw. der Deckel entsprechend abgeklappt oder zur Seite geschwenkt werden kann. Rücksichten, ob diese Maßnahmen Einfluss auf das zu behandelnde Gut haben könnten oder entsprechend thermisch zu berücksichtigende Massen darstellen, müssen nicht mehr getroffen werden.

In einer weiteren Ausgestaltung der Erfindung ist der Boden von der äußeren Wand getragen.

Diese Maßnahme hat, wie zuvor in Zusammenhang mit dem Deckel erwähnt, den Vorteil, dass der Boden nicht von der Wand getragen werden muss, die unmittelbar mit dem Produkt in Berührung steht.

In einer weiteren Ausgestaltung ist der Boden bewegbar an der Außenwand angebracht.

Diese Maßnahme eröffnet gleichermaßen, wie zuvor in Zusammenhang mit dem Deckel beschrieben, die Möglichkeit, den Boden absenkbar, wegklappbar oder seitlich verschwenkbar auszubilden, so dass auch von der Unterseite her einfach ein Zugang zur Prozesskammer und zum gesamten Innenbereich der Vorrichtung geschaffen werden kann. Sind beide Möglichkeiten vorgesehen, also sowohl Deckel als auch Boden bewegbar, ist der Innenraum sowohl von der Kopf- als auch von der Bodenseite aus einfach zugänglich. Dies erleichtert erheblich bspw. die Reinigung der Apparatur.

In einer weiteren Ausgestaltung der Erfindung ist die innere Wand von der äußeren Wand getragen.

Diese Maßnahme hat den Vorteil, dass die innere Wand bspw. in die äußere Wand eingestellt oder eingehängt oder sonst wie mechanisch angekuppelt werden kann, ohne dass diese innere Wand eigene Tragevorrichtungen oder dergleichen benötigt. Dieses eröffnet bspw. die Möglichkeit, die innere Wand sehr leicht, sehr einfach und aus Materialien herzustellen, die zum einen einen raschen Wärmetransport durch die innere Wand erlauben und gleichzeitig eine optimale Ausgestaltung der Innenseite der Innenwand ermöglichen, die das Behandlungsergebnis positiv beeinflussen. Wie erwähnt, wird das Gut in der Prozesskammer verwirbelt, wobei das Gut andauernd gegen die Innenseite der die Prozesskammer umgebenden Wand stößt, an dieser herabfällt und dann erneut durch die durch den Boden hindurchtretende Luft verwirbelt wird. Es ist bekannt, dass manche Gutteilchen eine gewisse Affinität zum Anhaften an Oberflächen besitzen, so dass es nun möglich ist, entsprechend optimale Innenwandflächen bereitzustellen, ohne darauf Rücksicht nehmen zu müssen, ob diese auch die ausreichende statische Stabilität aufweisen, denn dieser Teil wird von der Außenwand übernommen. Die Maßnahme, dass die innere Wand von der äußeren Wand getragen ist, eröffnet nun auch sehr einfach die Möglichkeit, diese innere Wand von der äußeren Wand abzunehmen, sei es durch Abziehen nach oben über den geöffneten Deckel oder nach unten über den geöffneten oder seitlich verschwenkten Boden.

Diese Maßnahme trägt auch dazu bei, dass der Innenraum der Vorrichtung sehr einfach gereinigt werden kann, insbesondere ist die Außenseite der inneren Wand und die Innenseite der äußeren Wand einfach zugänglich. Dies ist von besonders großem Vorteil bei Anwendung im pharmazeutischen Bereich.

In einer weiteren Ausgestaltung der Erfindung sind im Zwischenraum zwischen der äußeren und der inneren Wand Apparaturen zur Prozessluftkonditionierung angeordnet.

Diese Maßnahmen haben den Vorteil, dass die zugeführte Prozessluft in dem Zwischenraum noch kurz vor Eintritt durch den Boden in die Prozesskammer konditioniert werden kann.

In einer weiteren Ausgestaltung dieser Maßnahme ist vorgesehen, dass eine Apparatur zur Konditionierung der Prozesslufttemperatur im Zwischenraum angeordnet ist.

Diese Maßnahme hat den erheblichen ökonomischen und ökologischen Vorteil, dass die Zuluft im Zwischenraum selbst, also während sie vom Deckel zum Boden strömt, bspw. erwärmt werden kann.

Dadurch können dann Wärmeverluste, die beim Transport von abseits gelegenen Zuluft-Monoblock-Einheiten aufgetreten sind, ausgeglichen werden, oder die Zuluft kann überhaupt erst direkt vor Ort in dem Zwischenraum entsprechend erwärmt werden.

In einer weiteren Ausgestaltung der Erfindung ist die Apparatur zur Konditionierung der Prozessluftkammer als Heizwendel ausgebildet.

In üblichen Bauweisen ist die Wand stehend zylindrisch, so dass durch die neue Ausgestaltung mit innerer und äußerer Wand ein hohlzylindrischer Zwischenraum entsteht, in dem eine Heizwendel problemlos und ohne größeren Aufwand eingesetzt werden kann.

Durch die entsprechende Anzahl und Steigung der Wendeln kann eine effektive Temperaturübertragung auf die Prozessluft erzielt werden. Die Wendeln sind an deren Außenfläche aus hygienischen Gründen und aus Gründen einfacher Reinigung vorzugsweise glattflächig, d.h. ohne Rippen auszuführen.

In einer weiteren Ausgestaltung der Erfindung ist die innere. Wand als stehende zylindrische Wand ausgebildet.

Diese Maßnahme hat den Vorteil, dass die innere Wand sehr einfach herstellbar ist und dass die strenge Zylindergeometrie schon hervorragende Grundbedingungen für die Berührung mit dem Gut bereitstellt. Es sind somit keine Stufen, Ecken, Kanten oder Versätze vorhanden, die beim Aufprallen der Gutteilchen negative Auswirkungen hätten, bspw. bei einem gecoateten Teilchen wieder zu Abplatzungen führen würden, oder bei einem Agglomerat wieder zur Zerstörung des Agglomerats führen könnten.

In einer weiteren Ausgestaltung der Erfindung ist die der Prozesskammer zugewandte Seite der inneren Wand glatt ausgebildet.

Diese Maßnahme hat, insbesondere noch in Zusammenhang mit der Zylindergeometrie, den zuvor beschriebenen Vorteil einer möglichst problemlosen Berührung mit den aufprallenden Gutteilchen. Eine glatte Wand trägt dazu bei, unerwünschte Anhaftungen auszuschließen.

In einer weiteren Ausgestaltung der Erfindung ist die innere Wand zumindest im unteren Bereich mit Feinstperforationen versehen.

Diese Maßnahme hat den Vorteil, dass durch diese Feinstperforationen Teile der Prozessluft, die in dem Zwischenraum vom Deckel zum Boden strömt, bereits durch die Perforationen radial in die Prozesskammer eintreten können. Durch Ausbildung der Perforation als Feinstperforationen, vorzugsweise mit Durchmesser im Bereich von 0,05 mm bis 0,5 mm, entsteht in deren Bereich eine Art umfängliches Luftkissenschicht, die dafür sorgt, dass die in Richtung der Wand sich bewegende Gutteilchen zumindest abgedämpft oder sanft abgelenkt werden, so dass die zuvor erwähnten Beeinträchtigungen dahingehend ausgeschlossen werden, dass das Gutteilchen überhaupt nicht mehr oder zumindest durch ein Luftkissen gedämpft mit der Wand in Berührung tritt.

In einer weiteren Ausgestaltung der Erfindung sind die Feinstperforationen zumindest bis auf Höhe einer statisch ruhenden Füllhöhe des Gutes vorhanden.

Es hat sich herausgestellt, dass das Vorsehen der Feinstperforation in diesem Bereich besonders sinnvoll ist. Die verwirbelte Gutmenge wird höher stehen als die Füllhöhe des unbewegten Gutes. In diesem Bereich kann ein Gradient abnehmender Perforationszahl vorgesehen werden, da die Gutdichte am oberen Ende geringer wird.

In einer weiteren Ausgestaltung der Erfindung legen die Feinstperforationen etwa 5% bis 10% der Fläche der inneren Wand in diesem Bereich frei.

Dadurch ist sichergestellt, dass der überwiegende Teil der Prozessluft nach wie vor auch im Bereich dieser Feinstperforationen vom Deckel Richtung Boden strömt und nur ein relativ kleiner Teil der Prozessluft durch die Feinstperforationen eintritt.

Es soll lediglich ja dafür Sorge getragen werden, dass die Wandreibung deutlich verringert wird und dadurch eine schonendere und schnellere Bewegung insbesondere bei der Trocknung eines zu behandelnden Gutes bewerkstelligt wird.

In einer weiteren Ausgestaltung der Erfindung ist die innere Wand aus einem flexiblen Gewebe ausgebildet.

Diese Maßnahme hat den Vorteil, dass diese flexible Wandung in gewissem Maße Flatterbewegungen durchführt, wodurch sich keine Gutteilchen an der Innenseite ablagern. Bei manchem Gut ist die Neigung zu beobachten, auch bei hochpolierten glatten Edelstahlflächen anzuhaften. Eine solche flexible Wand lässt sich sehr einfach demontieren und reinigen. Die erwünschten Flatterbewegungen lassen sich durch die Führung der Prozesszuluft erzeugen.

In einer Ausgestaltung ist das Gewebe luftundurchlässig ausgebildet.

Diese Maßnahme hat den Vorteil, dass eine allseits geschlossene innere Wand vorhanden ist.

In einer anderen Ausgestaltung ist das Gewebe aerotransparent.

Diese Maßnahme hat denselben Vorteil wie zuvor in Zusammenhang mit den Feinstperforationen beschrieben.

Durch eine entsprechende Ausgestaltung der Maschenweite kann die Menge an Prozessluft, die durch die flexible Wand hindurchtreten wird, einfach gesteuert werden.

In einer weiteren Ausgestaltung ist das Gewebe zumindest bis auf Höhe der statisch ruhenden Füllhöhe aerotransparent.

Diese Maßnahme hat den Vorteil, dass eben in diesem kritischen Bereich die Aerotransparenz besteht, in anderen Bereichen, in der die Gutteilchen nicht oder nur in geringer Zahl an die Wand treffen, eben dann nicht notwendig ist. Praktisch durchführbar ist das bspw. einfach dadurch, dass das Maschenwerk des Gewebes in dem Bereich, wo es aerotransparent sein soll, mehr gespannt oder gezogen wird, so dass dann dadurch die Durchtrittsöffnungen entstehen.

In einer weiteren Ausgestaltung weist das flexible Gewebe Stabilisierungsringe auf.

Diese Maßnahme hat den Vorteil, dass durch solche Ringe bspw. das Gewebe in einer stehend zylindrischen Form gehalten werden kann.

In einer weiteren Ausgestaltung der Erfindung weist der die Prozesskammer abschließende Deckel eine schräg zur Hochachse des Gehäuses angestellte Trennwand auf.

Diese schräg angestellte Trennwand hat den Vorteil, dass im Bereich des Deckels sowohl eine Zuluftkammer als auch eine Abluftkammer auf insgesamt geringer Bauhöhe geschaffen werden kann. Der aus der Horizontalen abgesenkte Teil der schrägen Trennwand kann eine Zuluftkammer ausbilden, in der sich die über den Einlass zugeführte Zuluft sammelt und dann in den Zwischenraum zwischen innerer und äußerer Wand strömt. Entsprechend kann dann in dem aus der Horizontalen abgehobenen Teil der schrägen Wand, nämlich darunter, eine Abluftkammer gebildet werden, in der die aus der Prozesskammer abströmende Prozessluft gesammelt und gezielt dem Auslass zugeführt wird.

In einer weiteren Ausgestaltung der Erfindung ist die äußere Wand als wärmeisolierende Doppelwand ausgebildet.

Diese Maßnahme hat den Vorteil, dass Wärme von der im Zwischenraum zwischen der inneren und äußeren Wand strömenden Prozessluft nicht über die Außenwand an die Umwelt abgegeben und somit vergeudet wird, sondern dass diese Wärme entweder in der Prozessluft verbleibt oder in entsprechend gewünschtem Ausmaß an die innere Wand abgegeben wird.

In einer weiteren Ausgestaltung ist die innere Wand als gut wärmeleitende Wand ausgebildet.

Diese Maßnahme hat den Vorteil, dass Wärme von der Prozessluft rasch und wirksam über die gut wärmeleitende Innenwand auf das Gut übertragen werden kann. Da die innere Wand keine tragende Funktion hat, ist es möglich, die innere Wand relativ dünnwandig auszubilden. In Zusammenhang mit wärmeleitenden Materialien, z.B. Metallen, ist ein effektiver Wärmeaustausch möglich.

Es versteht sich, dass die vorstehend genannten und die nachstehend noch zu erläuternden Merkmale nicht nur in der angegebenen Kombination, sondern auch in anderen Kombinationen oder in Alleinstellung einsetzbar sind, ohne den Rahmen der Erfindung zu verlassen.

Die Erfindung wird nachfolgend anhand einiger ausgewählter Ausführungsbeispiele in Zusammenhang mit den beiliegenden Zeichnungen näher beschrieben und erläutert. Es zeigen:
- Fig. 1: eine stark schematisierte Seitenansicht einer erfindungsgemäßen Vorrichtung mit aufgeklapptem Deckel, abgehobener innerer Wand und abgesenktem Boden,
- Fig. 2: eine stark vergrößerte, teilweise aufgebrochene, perspektivische Ansicht eines Teils der äußeren Wand der Vorrichtung von Fig. 1,
- Fig. 3: einen vertikalen Längsschnitt der Vorrichtung von Fig. 1 im Betrieb,
- Fig. 4: einen etwas vergrößerten Vertikalschnitt von Fig. 3 im Bereich des Deckels,
- Fig. 5: einen etwas vergrößerten Vertikalschnitt im Bereich des Bodens, und
- Fig. 6: eine der Schnittdarstellungen von Fig. 3 vergleichbare Darstellung eines weiteren Ausführungsbeispiels mit flexibler innerer Wand.

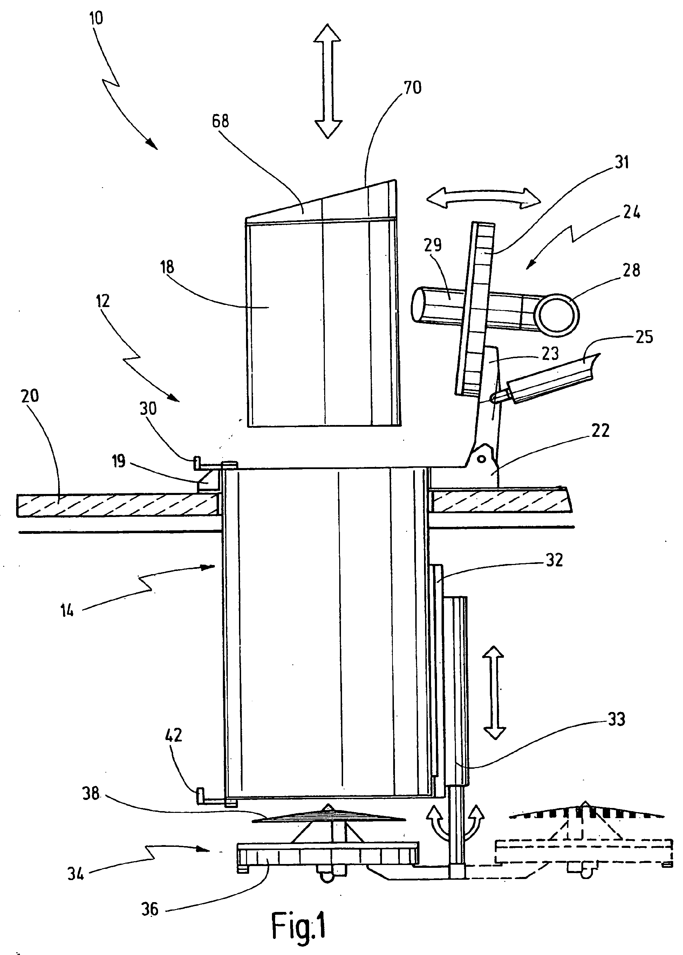

Ein in den Fig. 1 bis 5 dargestelltes erstes Ausführungsbeispiel einer erfindungsgemäßen Vorrichtung zum Behandeln von partikelförmigem Gut ist in ihrer Gesamtheit mit der Bezugsziffer 10 bezeichnet.

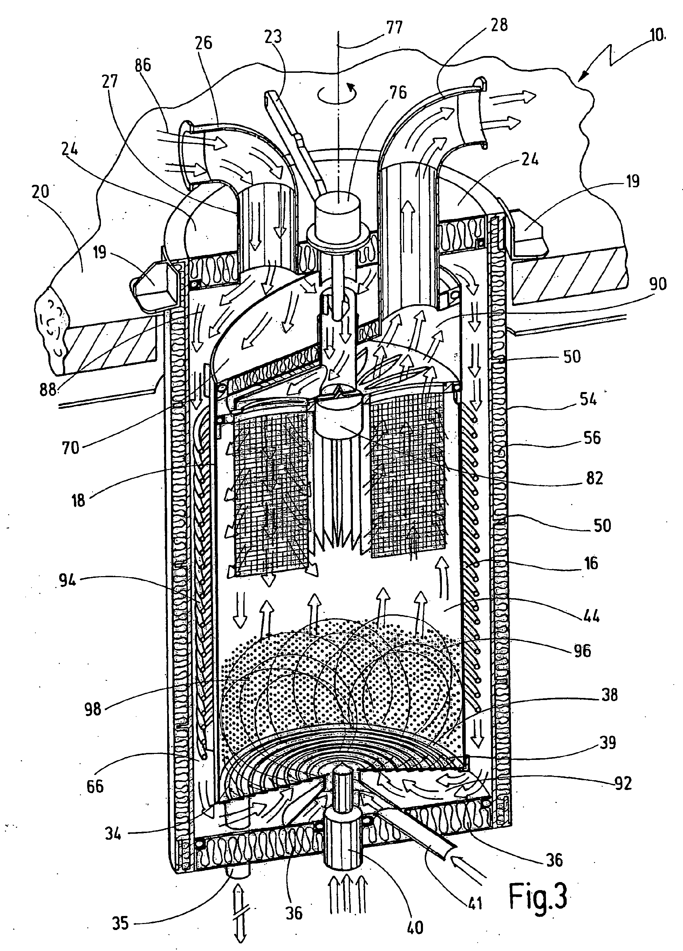

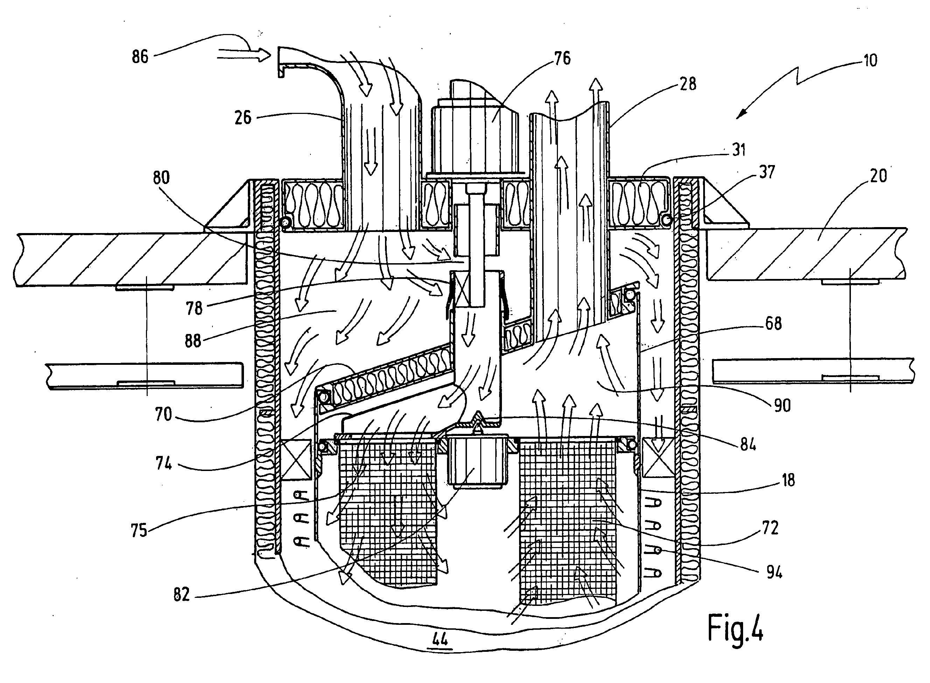

Die Vorrichtung 10 weist ein Gehäuse 12 auf, das eine Wand 14 aufweist. Die Wand 14 ist aus einer äußeren Wand 16 und einer inneren Wand 18 zusammengesetzt, wobei in Fig. 1 dargestellt ist, wie die innere Wand 18 von der äußeren Wand 16 abgehoben ist. Daraus ist zu erkennen, dass der lichte Außendurchmesser der inneren Wand 18 geringer ist als der Innendurchmesser der äußeren Wand 16, so dass, wenn die innere Wand 18 in die äußere Wand 16 eingesetzt ist, ein ringförmiger Zwischenraum 66 zwischen der inneren Wand 18 und der äußeren Wand 16 gebildet ist, wie das bspw. aus der Schnittdarstellung von Fig. 3 erkennbar ist. Die äußere Wand 16 ist an einem Träger 20 bspw. einer Decke oder einer Zwischendecke eines Gebäudes montiert. Über eine Halterung 22 ist außen am oberen Ende der äußeren Wand 16 ein Deckel 24 montiert. Die Halterung 22 weist einen Schwenkhebel 23 auf, der über ein Stellorgan 25 um eine Schwenkachse bewegt werden kann. Dadurch kann der Deckel 24 seitlich weggeschwenkt oder aufgeklappt werden, wie das in Fig. 1 dargestellt ist oder in einen Zustand verschwenkt werden, in dem der Deckel 24 das obere Ende der äußeren Wand 16 abschließt, wie das in Fig. 3 bzw. in Fig. 4 näher dargestellt ist bzw. in deren Zusammenhang noch näher beschrieben wird. Der Deckel 24 trägt einen Einlass 26 in Form eines Zuluftstutzens 27, sowie ein Auslass 28 in Form eines Auslassstutzens 29 wie er in Fig. 1 zu erkennen ist, in dieser Seitendarstellung ist der Zuluftstutzen 27 verdeckt, dieser ist in Fig. 3 zu erkennen.

Der Deckel 24 weist einen Abschlussdeckel 31 auf, der einen oberen dichtenden Abschluss der äußeren Wand 16 darstellt, wie das insbesondere aus der vergrößerten Schnittdarstellung von Fig. 4 ersichtlich ist. Dazu ist der Abschlussdeckel 31 umfänglich mit einer pneumatischen Dichtung 37 versehen, die einen dichtenden Abschluss zwischen der Innenseite der äußeren Wand 16 und dem Abschlussdeckel 31 und somit auch dem Deckel 24 bildet. Ein Riegel 30 dient dazu, den geschlossenen Deckel 24 in der geschlossenen Position zu verriegeln.

Aus Fig. 1 ist ferner zu entnehmen, dass an der unteren Außenseite der äußeren Wand 16 ein Boden 34 befestigt ist.

Der Boden 34 ist über eine Halterung 32 an der Außenseite angebracht, die eine Kolben/Zylinder-Einheit 33 aufweist. Dadurch ist der gesamte Boden 34 vertikal bewegbar, wie das durch den Doppelpfeil angedeutet ist, und außerdem um die Längsachse der Kolben/Zylinder-Einheit 33 verschwenkbar.

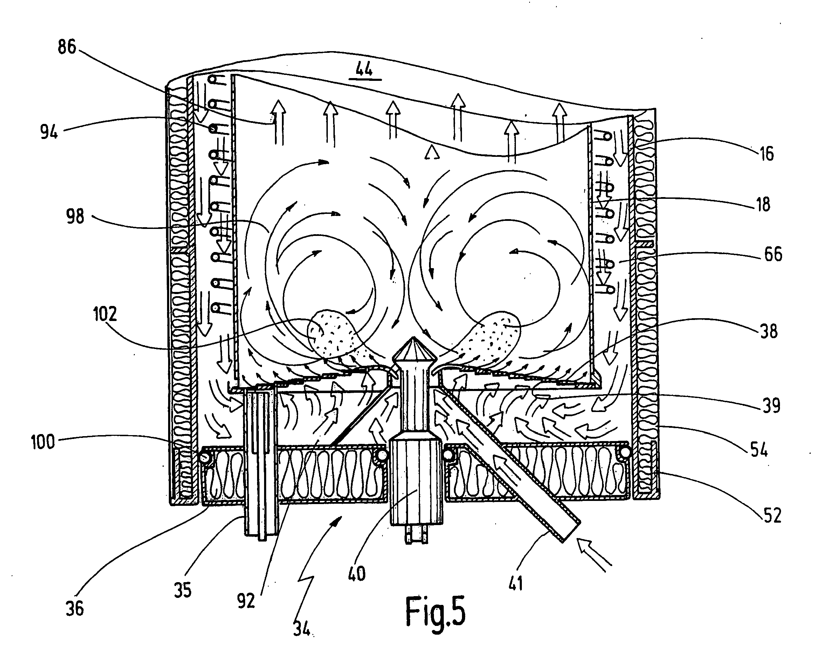

Der Boden 34 kann aus einer schließenden Stellung, wie sie in Fig. 5 dargestellt ist, zunächst über die Kolben/Zylinder-Einheit 33 von der Unterseite der äußeren Wand 16 abgesenkt werden, wie das in Fig. 1 dargestellt ist, und anschließend seitlich verschwenkt werden, wobei das in den gestrichelten Linien dargestellt ist.

Auch der Boden 34 bzw. dessen Bodenplatte 36 schließt das untere Ende der zylindrischen äußeren Wand 16 dichtend ab, nämlich über eine pneumatische Dichtung 100, wie das in Fig. 5 ersichtlich ist.

Ein Riegel 42 dient zum Verriegeln des Bodens 34 in seinem geschlossenen Zustand.

Der Boden 34 weist ferner einen Satz von übereinander angeordneten Ringblechen 38 auf, zwischen denen Durchtrittsöffnungen 39 in Form von umfänglichen Schlitzen ausgebildet sind, wie das insbesondere aus Fig. 3 ersichtlich ist. Mittig in den Ringblechen 38 ist eine Düse 40 eingesetzt, die als horizontal stehende, um 360° umfänglich sprühende Ringspaltdüse ausgebildet ist. Ein Düsenblasflansch 41 versorgt die Düse mit Blasluft.

Die nähere Ausgestaltung und Funktionsweise des Bodens ist bspw. in der WO 2006/027009 A1 beschrieben, die nähere Ausgestaltung und Funktionsweise der Düse ist bspw. in der DE 102 32 803 A1 beschrieben.

Wie insbesondere aus Fig. 3 zu erkennen, ist der Außendurchmesser des äußersten Ringbleches 38 so ausgebildet, dass dieses etwa dem Innendurchmesser des unteren Endes der Innenwand 18 entspricht, wie das insbesondere aus Fig. 5 ersichtlich ist. Bei eingeschwenkten und angehobenem Boden 34 ist somit die innere hohlzylindrische Wand 18 bodenseitig durch den Satz an Ringblechen 38 abgeschlossen.

Der Innenraum der inneren Wand 18 bildet eine Prozesskammer 44, die durch den Satz an Ringblechen 38 bodenseitig abgeschlossen ist.

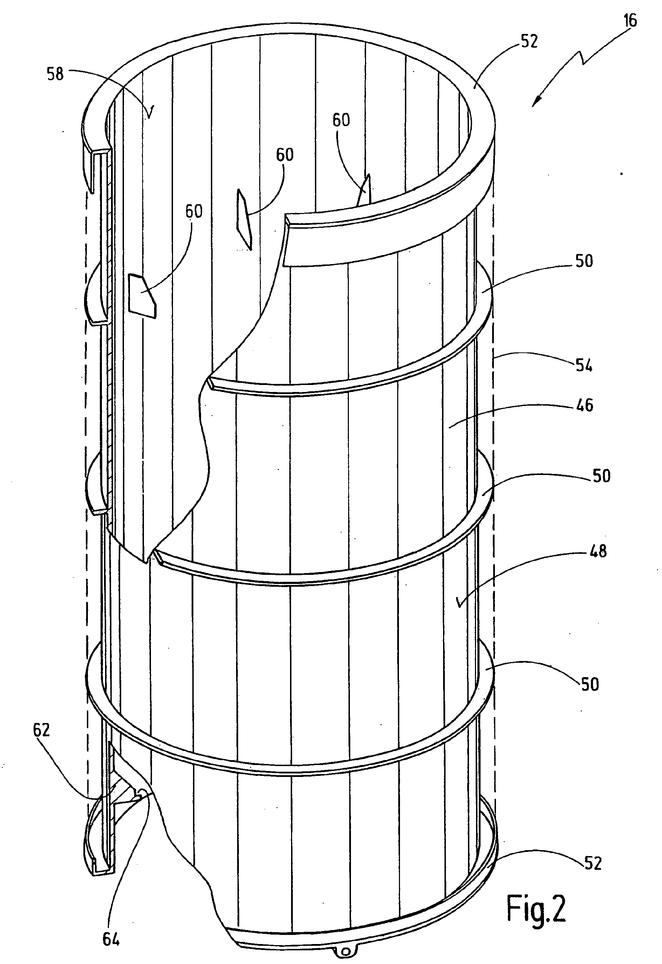

In Zusammenhang mit Fig. 2 soll nunmehr zunächst die nähere konstruktive Ausgestaltung der äußeren Wand 16 beschrieben werden.

Die äußere Wand 16 besteht aus einem statisch tragenden stabilen Zylinder aus Edelstahl. An der Außenseite 48 sind axial voneinander beabstandet drei Verstärkungsflansche 50 angebracht. Am oberen bzw. unteren Ende ist jeweils ein Endflansch 52 angeordnet. Über den oberen Endflansch 52 ist die gesamte Vorrichtung 10 bspw. mittels Montagewinkel 19 in einer Öffnung in dem Träger 20 montiert, wie das aus Fig. 1 und Fig. 3 ersichtlich ist. An der Innenseite 58 weist die äußere Wand 16 radial vorspringende Distanzstücke 60 auf, die dafür sorgen, dass die innere Wand 18 konzentrisch ausgerichtet in der äußeren Wand 16 aufgenommen werden kann.

Am unteren Endbereich der Innenseite 58 der äußeren Wand 16 sind umfänglich verteilt verschiedene Auflagestücke 62 vorhanden, die dem Innenraum zugewandt jeweils einen Absatz 64 aufweisen. Der Absatz 64 dient jeweils dazu, dass darauf die Unterkante der inneren Wand 18 aufgesetzt werden kann.

In anderen Worten ausgedrückt, steht die innere Wand 18, wenn sie aus der in Fig. 1 dargestellten Position in die äußere Wand 16 vollständig eingeschoben wird, auf den Absätzen 64 der Auflagestücke 62 und wird somit von der äußeren Wand 16 getragen. Die Distanzstücke 60 halten die innere Wand konzentrisch ausgerichtet und bestimmen somit den dadurch ausgebildeten Zwischenraum 66 zwischen der inneren Wand 18 und der äußeren Wand 16.

Um die Außenseite 48 der äußeren Wand 16 wird noch ein Dämmmaterial 56 gebracht und anschließend durch eine Außenhülle 54 umschlossen, wie das aus Fig. 3 ersichtlich ist.

Im Endbauzustand ist die äußere Wand 16 das statisch tragende Bauteil der gesamten Vorrichtung 10, an der die Bauteile Deckel 24 und Boden 34 angebracht sind und in der die innere Wand 18 in dieser innenstehend aufgenommen ist.

Wie insbesondere aus der Darstellung von Fig. 1 zu erkennen, kann die innere Wand 18 einfach entnommen werden, bspw. deckseitig, so dass dann der gesamte Innenraum der Vorrichtung 10 einfach gereinigt werden kann.

In Fig. 1 ist dargestellt, dass die innere Wand 18 nach oben abgenommen werden kann.

Es ist auch möglich, die innere Wand 18 bei zur Seite geschwenktem Boden 34 nach unten abzunehmen. Dazu ist dann die Außenseite der inneren Wand 18 mit entsprechenden Auflagekrallen versehen, die mit den umfänglich verteilten Auflagestücken 62 in Eingriff stehen. Wird die innere Wand 18 etwas abgehoben und um ein Winkelmaß verdreht, kommen diese Teile außer Eingriff und die innere Wand 18 kann bspw. nach unten abgezogen werden. Dies kann je nach den gegebenen örtlichen Baulichkeiten bewerkstelligt werden.

Aus der Schnittdarstellung von Fig. 3 und 4 ist noch zu entnehmen, dass an der Unter- oder Innenseite des Deckels 24 eine schräg stehende Trennwand 70 angeordnet ist. Diese schräg stehende Trennwand 70 kann entweder an einem Aufsatz 68, der auf das obere Ende der inneren Wand 18 aufgesetzt ist, angebracht sein, oder unmittelbar mit dem Abschlussdeckel 31 verbunden werden. Der Auslass bzw. der Auslassstutzen 28 steckt in einer hier nicht näher bezeichneten Öffnung in der Trennwand 70 und zwar in dem gegenüber der Horizontalen hochstehenden Abschnitt der Trennwand 70.

Mittig in der Trennwand 70 ist ein Motor 76 angeordnet, der einen Blasschuh 74 um die Hochachse 77 der Vorrichtung 10 dreht. Der Blasschuh 74 weist eine Mündung 75 auf, die am oberen Ende von in der Prozesskammer 44 angeordneten Filtern 72 mündet. Die Filter 72 sind als Faltenfilter ausgebildet, wie das ja an sich bekannt ist.

Der vom Motor 76 gedrehte Blasschuh 74 läuft über die Oberseite der einzelnen Falten der Filter 72 und bläst daran anhaftende Gutteilchen ab, die dann wieder Richtung Boden in die Prozesskammer 44 zurückfallen, wie das an sich bekannt ist.

Der Blasschuh 74 wird mit Blasluft dadurch versorgt, wie das insbesondere aus Fig. 4 ersichtlich ist, dass über eine Öffnung 80 im Hals 78 ein Teil der durch den Einlassstutzen 26 eintretenden Prozessluft 86 in das innere des Blasschuhs 74 eintreten kann.

Wie auch aus der Schnittdarstellung von Fig. 4 zu erkennen, liegt der gegenüber der Horizontalen abgesenkte Teil der schräg angestellten Trennwand 70 unter dem Einlass 26, wodurch eine Zuluftkammer 88 ausgebildet ist. Aus dieser Zuluftkammer 88 strömt die über den Einlass 26 zugeführte Prozessluft im überwiegenden Teil von oben nach unten durch den Zwischenraum 66 in Richtung Boden 34.

Ebenfalls aus der Schnittdarstellung von Fig. 4 ist zu erkennen, dass unter dem angehobenen Teil der geneigten Trennwand 70 über dem Innenraum der inneren Wand 18, also der Prozesskammer 44, eine Abluftkammer 90 ausgebildet ist, in der sich die von der Prozesskammer 44 abströmende Prozessluft 86 sammelt und über den Auslass 28 abgeführt wird.

Ferner ist aus Fig. 4 zu entnehmen, dass mittig zentral eine Kamera 82 eingehängt ist, über die die in der Prozesskammer 44 ablaufenden Vorgänge beobachtet werden können, wie das bspw. aus Fig. 3 ersichtlich ist.

Aus Fig. 4 ist auch ersichtlich, dass an der Oberseite der Kamera 82 ein Lager 84 für den umlaufenden Blasschuh 74 vorhanden ist. Aus den Darstellungen von Fig. 3, 4 und 5 ist ferner zu erkennen, dass in dem Zwischenraum 66 eine Heizwendel 94 angeordnet ist, die aus einem Wendelrohr besteht, das von einem Heizmedium durchströmt werden kann.

Im Betrieb wird das zu behandelnde Gut 98, das zunächst auf dem Satz an Ringblechen 38 ruht, durch die Prozessluft 86 verwirbelt.

Dazu wird die Prozessluft 86, die abseits konditioniert wurde, dem Einlass 26 zugeführt und strömt über die Zuluftkammer 88 in dem Zwischenraum 66 von oben nach unten. Unter dem Satz an Ringblechen 38 ist noch ein Zuluft-Windhaus 92 vorhanden, dessen Höhe in etwa der Breite des Zwischenraumes 66 entspricht. Dadurch wird die von oben nach unten strömende Prozessluft 86 an die Unterseite des Satzes an Ringblechen 38 geführt, tritt durch dessen Durchtrittsöffnungen 39 mit einer starken horizontalen Komponente durch den Boden 34 hindurch und in die Prozesskammer 44 hinein, wie das an sich bekannt ist. Das verwirbelte Gut 98 wird bspw. über die Düse 40 mit einem Behandlungsmedium beaufschlagt, beim Granulieren bspw. mit einer klebrigen Flüssigkeit, um aus feinstäubigen Teilen größere Granulatteilchen zu bilden. Die Düse 40 versprüht dabei eine horizontal ausgerichtete Sprühflade 102, wie das insbesondere aus Fig. 5 ersichtlich ist. Aufgrund der Schwerkraft fallen die Gutteilchen 98 wieder in Richtung auf den Boden 34 zurück und werden erneut verwirbelt, so dass sich in dieser Ausgestaltung ein rotierender toroidal schwebender Ring ausbildet.

Die Prozessluft 86 tritt vom Gut 98 aus und strömt nach oben durch die Filter 72 zur Abluftkammer 90 ab und tritt über den Auslass 28 aus der Vorrichtung 10 aus.

Aus Fig. 3 ist zu erkennen, dass im unteren Bereich die innere Wand 18 mit Feinstperforationen 96 versehen ist. Dadurch ist möglich, dass Teile der im Zwischenraum 66 nach unten strömenden Prozessluft 86 durch die Feinstperforationen 96 radial nach innen in die Prozesskammer 44 eintreten. Durch Ausbildung als Feinstperforationen treten nur geringe Prozessluftmengen ein und bilden an der Innenseite der inneren Wand 18 in diesem Bereich eine Art Luftpolster, wodurch die Wandreibung verringert wird. Anders ausgedrückt, treffen die verwirbelten Gutteilchen im Bereich der Feinstperforationen 96 auf eine Art Luftkissen, das die Reibung mit der Innenseite der Wand 18 reduziert. Der Durchmesser der einzelnen Perforationen liegt im Bereich von 0,05 bis 0,5 mm. Die Anzahl ist so gewählt, dass in dem unteren Bereich, in dem die Feinstperforationen 96 vorhanden sind, etwa 5-10 % der Fläche der inneren Wand 18 freiliegend sind. Dabei kann am oberen Ende des Bereichs der Feinstperforationen 96 eine abnehmende Zahl an Feinstperforationen 96 vorhanden sein.

Nach der Behandlung wird die Zufuhr der Prozessluft gestoppt und das behandelte Gut kann über einen Entleerstutzen 35 aus der Vorrichtung 10 abgeführt werden. Dieser Entleerstutzen 35 kann auch zum Befüllen benutzt werden bzw. das Befüllen des Innenraums kann auch bei geöffnetem Deckel 24 erfolgen.

Wie bereits in Zusammenhang mit Fig. 1 beschrieben, kann die Vorrichtung 10 einfach zerlegt bzw. geöffnet werden, so dass dann alle Bereiche einfach gereinigt werden können, so dass ein Einsatz der Vorrichtung 10 in der pharmazeutischen Industrie besonders günstig ist.

Die innere Wand 18 kann aus geeigneten Materialien hergestellt werden, bspw. aus einem relativ dünnen hochpolierten Edelstahlblech, das ggf. noch mit den Feinstperforationen 96 versehen ist.

Ist das Gut gegenüber Aufprallen an der Innenseite der inneren Wand 18 nicht besonders kritisch, können auch die Feinstperforationen 96 weggelassen werden. Es ist auch möglich, in der Apparatur Düsen zum Zuführen einer Reinigungsflüssigkeit vorzusehen, um ein sog. Cleaning-in-Place durchzuführen. Falls es das behandelnde Gut zulässt, reicht eine solche Reinigung aus, bspw. bei grobkörnigem zu behandelnden Gut, das nicht im pharmazeutischen Bereich eingesetzt wird.

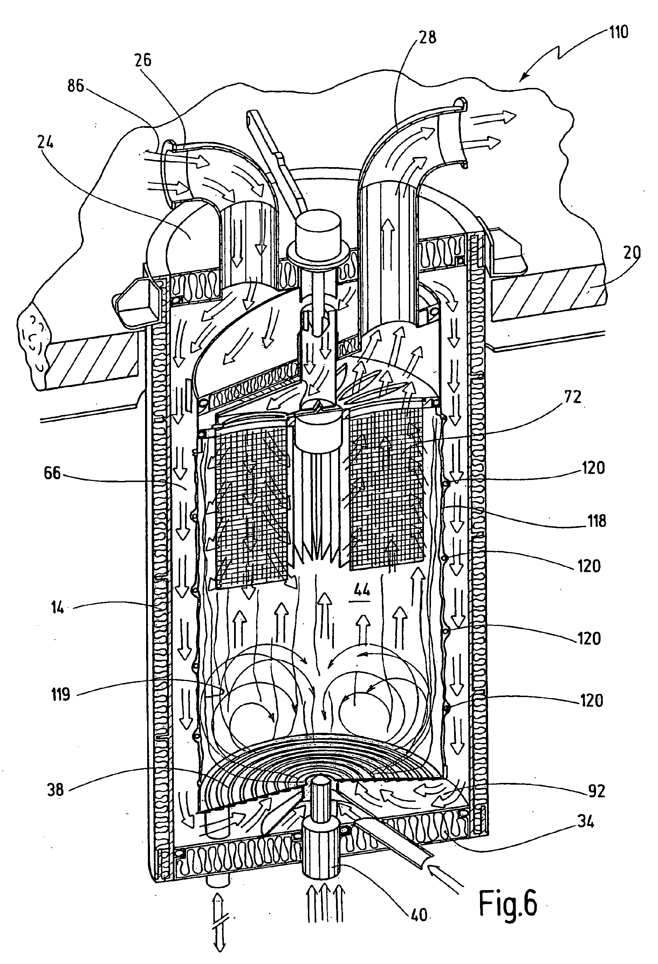

In Fig. 6 ist ein weiteres Ausführungsbeispiel einer erfindungsgemäßen Vorrichtung 110 dargestellt, bei der die meisten Bauteile identisch ausgebildet sind wie bei der zuvor in Zusammenhang mit den Figuren 1 bis 5 beschriebenen Vorrichtung 10. Daher sind für diese Bauteile auch dieselben Bezugsziffern verwendet worden.

Der Unterschied bei der Vorrichtung 110 gegenüber der Vorrichtung 10 besteht darin, dass die innere Wand 118 aus einem Gewebe 119 besteht.

Das Gewebe 119 ist in Form eines Schlauches vorhanden, dessen Form und Kontur dem Zylinder der inneren Wand 18 entspricht. Das Gewebe 119 ist am oberen Ende an einem Boden befestigt, an dem auch die Filter 72 befestigt sind und hängt nach unten ab. Am unteren Ende ist es umfänglich dichtend mit dem äußeren Umfang des Satzes an Ringblechen 38 verbunden. Zur Stabilisierung sind in dem Gewebe 119 mehrere horizontal ausgerichtete Ringe 120 angebracht.

Durch die Ausbildung der inneren Wand 118 als Gewebe, können durch die diese Wand 118 umströmende Prozessluft wabernde Bewegungen entstehen, die ein Anhaften von Gutteilchen verhindern bzw. bereits anhaftende wieder abschütteln.

Es ist möglich, das Gewebe 119 luftdicht auszubilden, so dass keine Prozessluft 86 aus dem Zwischenraum 66 durch das Gewebe 119 nach innen dringen kann.

Es ist auch möglich, das Gewebe 119 aerotransparent auszubilden, so dass es möglich ist, dass gewisse Mengen an Prozessluft durch das Gewebe hindurchtreten kann, wobei das durch die entsprechende Maschengröße gesteuert werden kann. Es kann auch vorgesehen sein, dass das Gewebe 119, wie zuvor in Zusammenhang in Fig. 3 mit den Feinstperforationen 96 beschrieben, nur in diesem unteren Bereich aerotransparent ist, wohingegen es im oberen Bereich dicht ist.

Die innere Wand 118 kann nach Gebrauch einfach aus der Vorrichtung 110 genommen und gereinigt werden.

## Patentansprüche

1. Vorrichtung zum Behandeln von partikelförmigem Gut (98), mit einem Gehäuse (12), das eine Prozesskammer (44) zum Aufnehmen und Behandeln des Gutes (98), einen mit Durchtrittsöffnungen für Prozessluft (86) versehenen Boden (34), einen Deckel (24) mit einem Auslass (28) für die Prozessluft (86), einen Einlass (26) für die Prozessluft (86), sowie eine die Prozesskammer (44) umfänglich umgebende Wand (14) aufweist, wobei die Wand (14) eine innere Wand (18) und eine diese in radialem Abstand umgebende äußere Wand (16) aufweist, wobei der Einlass (26) für die Prozessluft (86) am Deckel (24) angeordnet ist und in einen zwischen innerer (18) und äußerer Wand (16) gebildeten Zwischenraum (66) mündet, der strömungstechnisch mit den Durchtrittsöffnungen im Boden (34) verbunden ist, **dadurch gekennzeichnet, dass** die äußere Wand (16) als statisch tragende Gehäusewand ausgebildet ist, dass der Deckel (24) von der äußeren Wand (16) getragen ist, und dass die innere Wand (18) für einen raschen Wärmetransport ausgebildet ist.

2. Vorrichtung nach Anspruch 1, **dadurch gekennzeichnet, dass** der Deckel (24) bewegbar an der äußeren Wand (16) angebracht ist.

3. Vorrichtung nach Anspruch 1 oder 2, **dadurch gekennzeichnet, dass** der Boden (34) von der äußeren Wand (16) getragen ist.

4. Vorrichtung nach Anspruch 3, **dadurch gekennzeichnet, dass** der Boden (34) bewegbar an der äußeren Wand (16) angebracht ist.

5. Vorrichtung nach einem der Ansprüche 1 bis 4, **dadurch gekennzeichnet, dass** die innere Wand (18) in die äußere Wand (16) ein- und ausfahrbar ist.

6. Vorrichtung nach einem der Ansprüche 1 bis 5, **dadurch gekennzeichnet, dass** die innere Wand (18) von der äußeren Wand (16) getragen ist.

7. Vorrichtung nach einem der Ansprüche 1 bis 6, **dadurch gekennzeichnet, dass** im Zwischenraum (66) zwischen äußerer (16) und innerer Wand (18) Apparaturen zur Prozessluftkonditionierung angeordnet sind.

8. Vorrichtung nach Anspruch 7, **dadurch gekennzeichnet, dass** im Zwischenraum (66) eine Apparatur zur Konditionierung der Prozesslufttemperatur angeordnet ist.

9. Vorrichtung nach Anspruch 8, **dadurch gekennzeichnet, dass** die Apparatur zur Konditionierung der Prozesslufttemperatur als Heizwendel (94) ausgebildet ist.

10. Vorrichtung nach einem der Ansprüche 1 bis 9, **dadurch gekennzeichnet, dass** die innere Wand (18) als stehende zylindrische Wand ausgebildet ist.

11. Vorrichtung nach einem der Ansprüche 1 bis 10, **dadurch gekennzeichnet, dass** die der Prozesskammer (44) zugewandte Seite der inneren Wand (18) glatt ausgebildet ist.

12. Vorrichtung nach einem der Ansprüche 1 bis 11, **dadurch gekennzeichnet, dass** die innere Wand (18) zumindest im unteren Bereich mit Feinstperforationen (96) versehen ist.

13. Vorrichtung nach einem der Ansprüche 1 bis 12, **dadurch gekennzeichnet, dass** die innere Wand (118) aus einem flexiblen Gewebe (119) gebildet ist.

14. Vorrichtung nach einem der Ansprüche 1 bis 13, **dadurch gekennzeichnet, dass** die äußere Wand (16) als wärmeisolierende Doppelwand ausgebildet ist.

15. Vorrichtung nach einem der Ansprüche 1 bis 14, **dadurch gekennzeichnet, dass** die innere Wand (18) als gut wärmeleitende Wand ausgebildet ist.

## Claims

1. A device for treating particulate material (98), with a housing (12) which has a process chamber (44) for receiving and treating the material (98), a bottom (34) provided with orifices for the passage of process air (86), a cover (24) with an outlet (28) for the process air (86), an inlet (26) for the process air (86) and a wall (14) circumferentially surrounding the process chamber (44), the wall (14) having an inner wall (18) and an outer wall (16) surrounding the latter at a radial distance, the inlet (26) for the process air (86) being arranged on the cover (24) and issuing into an interspace (66) which is formed between the inner (18) and the outer (16) wall and which is flow-connected to the passage orifices in the bottom (34), **characterized in that** the outer wall (16) is designed as a statically load-bearing housing wall, **in that** the cover (24) is carried by the outer wall (16), and **in that** the inner wall (18) is designed for rapid heat transport.

2. The device of claim 1, **characterized in that** the cover (24) is attached moveably to the outer wall (16).

3. The device of claims 1 or 2, **characterized in that** the bottom (34) is carried by the outer wall (16).

4. The device of claim 3, **characterized in that** the bottom (34) is attached moveably to the outer wall (16).

5. The device of anyone of claims 1 to 4, **characterized in that** the inner wall (18) can be moved into and out of the outer wall (16).

6. The device of anyone of claims 1 to 5, **characterized in that** the inner wall (18) is carried by the outer wall (16).

7. The device of anyone of claims 1 to 6, **characterized in that** appliances for conditioning the process air are arranged in the interspace (66) between the outer (16) and the inner (18) wall.

8. The device of claim 7, **characterized in that** an appliance for conditioning the process air temperature is arranged in the interspace (66).

9. The device of claim 8, **characterized in that** the appliance for conditioning the process air temperature is designed as a heating coil (94).

10. The device of anyone of claims 1 to 9, **characterized in that** the inner wall (18) is designed as a standing cylindrical wall.

11. The device of anyone of claims 1 to 10, **characterized in that** that side of the inner wall (18) which faces the process chamber (44) is designed to be smooth.

12. The device of anyone of claims 1 to 11, **characterized in that** the inner wall (18) is provided with superfine perforations (96) at least in the lower region.

13. The device of anyone of claims 1 to 13, **characterized in that** the inner wall (18) is formed from a flexible fabric (119).

14. The device of anyone of claims 1 to 13, **characterized in that** the outer wall (16) is designed as a heat-insulating double wall.

15. The device of anyone of claims 1 to 14, **characterized in that** the inner wall (18) is designed as a highly heat-conductive wall.

## Revendications

1. Dispositif de traitement d'une matière particulaire (98), équipé d'un boîtier (12) comprenant une chambre d'opération (44) affectée à la réception et au traitement de ladite matière (98), un fond (34) percé d'orifices de passage d'air de traitement (86), un couvercle (24) pourvu d'une sortie (28) de l'air de traitement (86), une admission (26) de l'air de traitement (86), ainsi qu'une paroi (14) ceinturant la périphérie de ladite chambre d'opération (44), ladite paroi (14) incluant une paroi intérieure (18) et une paroi extérieure (16) entourant cette dernière avec espacement radial, l'admission (26) de l'air de traitement (86) étant située sur ledit couvercle (24), et débouchant dans un espace interstitiel (66) qui est formé entre ladite paroi intérieure (18) et ladite paroi extérieure (16), et est en liaison technique d'écoulement avec les orifices de passage pratiqués dans ledit fond (34), **caractérisé par le fait que** la paroi extérieure (16) est réalisée sous la forme d'une paroi de boîtier assurant un support statique ; **par le fait que** le couvercle (24) est supporté par ladite paroi extérieure (16) ; et **par le fait que** la paroi intérieure (18) est réalisée en vue d'un transfert de chaleur rapide.

2. Dispositif selon la revendication 1, **caractérisé par le fait que** le couvercle (24) est monté mobile sur la paroi extérieure (16).

3. Dispositif selon la revendication 1 ou 2, **caractérisé par le fait que** le fond (34) est supporté par la paroi extérieure (16).

4. Dispositif selon la revendication 3, **caractérisé par le fait que** le fond (34) est monté mobile sur la paroi extérieure (16).

5. Dispositif selon l'une des revendications 1 à 4, **caractérisé par le fait que** la paroi intérieure (18) peut être introduite dans la paroi extérieure (16), et extraite de cette dernière.

6. Dispositif selon l'une des revendications 1 à 5, **caractérisé par le fait que** la paroi intérieure (18) est supportée par la paroi extérieure (16).

7. Dispositif selon l'une des revendications 1 à 6, **caractérisé par le fait que** des équipements, dévolus au conditionnement de l'air de traitement, sont logés dans l'espace interstitiel (66) situé entre les parois extérieure (16) et intérieure (18).

8. Dispositif selon la revendication 7, **caractérisé par le fait qu'**un équipement, dévolu au conditionnement de la température de l'air de traitement, est logé dans l'espace interstitiel (66).

9. Dispositif selon la revendication 8, **caractérisé par le fait que** l'équipement, dévolu au conditionnement de la température de l'air de traitement, est réalisé sous la forme d'un élément chauffant hélicoïdal (94).

10. Dispositif selon l'une des revendications 1 à 9, **caractérisé par le fait que** la paroi intérieure (18) est réalisée sous la forme d'une paroi cylindrique dressée verticalement.

11. Dispositif selon l'une des revendications 1 à 10, **caractérisé par le fait que** la face de la paroi intérieure (18) qui pointe vers la chambre d'opération (44) est de réalisation lisse.

12. Dispositif selon l'une des revendications 1 à 11, **caractérisé par le fait que** la paroi intérieure (18) est dotée de perforations ultrafines (96), au moins dans la région inférieure.

13. Dispositif selon l'une des revendications 1 à 12, **caractérisé par le fait que** la paroi intérieure (118) est constituée d'un tissu flexible (119).

14. Dispositif selon l'une des revendications 1 à 13, **caractérisé par le fait que** la paroi extérieure (16) est réalisée sous la forme d'une paroi double thermiquement isolante.

15. Dispositif selon l'une des revendications 1 à 14, **caractérisé par le fait que** la paroi intérieure (18) est réalisée sous la forme d'une paroi à bonne conductivité thermique.
